# EUROPEAN PATENT SPECIFICATION

(11) **EP 2 168 892 B1**
(45) Date of publication and mention of the grant of the patent: **22.02.2012**
(21) Application number: 09171481.6
(22) Date of filing: 28.09.2009
(51) Int. Cl.: B65G 47/90, B25J 15/02

(54) **Pick and place device, gripper and method**
Aufnahme- und Positionierungsvorrichtung, Greifer und Verfahren
Dispositif de bras-transfert, préhenseur et procédé

(30) Priority: 27.09.2008 NL 1035994
(43) Date of publication of application: 31.03.2010
(73) Proprietor: Overveld Machines B.V., 4631 SN Hoogerheide (NL)
(72) Inventor: Van Overfeld, Johannes Christianus, 2910 Essen (BE)
(74) Representative: Van Someren, Petronella F. H. M.

(56) References cited:
- EP-A- 1 886 772
- WO-A-99/00306

## Description

The present invention is related to a pick and place device, a gripper for such a device, and a method to pick and place a product. The present invention is particularly related to picking and placing thin pliable products such as thin sheets or slices of meat.

Such gripper, device and method, as defined by the preambles of claims 1, and 13, respectively, are known from WO-A-99 00306.

A known device for picking and placing products from a first position to a second position as in EP-B 1 685 045 comprises a robotic arm of which a moveable end thereof is connected to a gripper. This gripper is arranged for gripping and/or releasing the product and it comprises a mounting frame to which a gripping assembly and pressing member are coupled. The gripping assembly comprises a gripping arm having one end thereof coupled to the mounting frame and another end thereof secured to a gripping blade. It is operable to be in a closed position to grip the product and an open position to release the product. The pressing member is coupled to the mounting frame and is arranged for clamping the product by exerting a pressing force thereto. Usually, detection means are incorporated in the device to determine the location and orientation of the product prior to gripping. The robotic arm is controlled by a controller to move the robotic arm and gripper to the product, to pick up the product by controlling the gripper, to move the robotic arm to the second position, and to release the product by controlling the gripper.

Especially for thin pliable products, such as slices of meat, the known device suffers from the effect that, during gripping of the product, the ends of the slices of meat bend when they are engaged by the gripping blades. To prevent this from occurring the overall speed of the pick and place device must be reduced.

It is an objective of the present invention to provide a solution that enables a better gripping of the product and that enables a faster picking and placing process.

This objective is achieved with a gripper as defined in claim 1, and a device as defined in claim 13.

It has been found by the applicant that a rotational movement of the gripping arm, instead of a linear motion, improves the gripping ability of the gripper. Not wishing to be bound by theory, this unexpected result could be explained by the forces that act on the product and the product carrying surface, e.g. a conveyor belt, on which the product is placed. Due to the rotational movement, a force is exerted on the product carrying surface. This force is not present, at least not significantly, in devices that use a linear movement of the gripping blades parallel to the product carrying surface. In the present invention, this force enables a scraping motion which improves the gripping capabilities of the gripper.

The gripper according to the present invention is particularly useful for gripping and releasing thin pliable products such as thin sheets or slices of meat, hamburgers, cheese, biscuits, pancakes, wraps and various other foodstuffs.

It should be noted that is important that the axis of rotation of the gripping arm has a large component parallel to the product carrying surface. This enables a gripping motion that much resembles that of a hand.

Due to the large forces that may be exerted by the product carrying surface onto the gripper, it is advantageous if the gripping arm and or the gripping blade are/is deformable. This allows part of the force to be absorbed by the deformation.

The deformation could be implemented by means arranged to absorb the force exerted by the product carrying surface on the gripper during placement or release of the product. However, the force absorbing means do not need to be deformable elements, such as a spring. For instance, two mutually repelling magnets present means to absorb a force driving them together, but these magnets are not deformable as such.

Preferably, the force absorption means can be regulated. The gripper could for instance be coupled to the robotic arm by way of a damper that has an adjustable damping constant. By adjusting the force absorption means, e.g. adjusting the dampers, the scraping motion of the gripping blades can be optimized with respect to the product to be displaced.

The gripping blade also comprises a resilient member. During gripping, the gripping blades are pressed onto the product carrying surface. As a result, the gripping blades will bend but they will still touch the product carrying surface firmly.

The back surface of the gripping blade, i.e. the surface of the gripping blade that faces the product carrying surface, is preferably arranged obliquely with respect to the product carrying surface. Assuming a normal configuration of a product lying horizontally on a conveyor belt, the edge of the gripping blade nearest to the product would be shifted downwards with respect to the opposing edge.

The gripping arm and pressing member can preferably be mechanically driven. The actuator(s) needed to realize motion of the arm and pressing member can be implemented in the gripper itself. Communication with the controller can be achieved by a wired connection via the robotic arm or using a wireless communication link.

Examples of actuators to realize the above mentioned mechanical drive are hydraulic or pneumatic cylinders, although electric motors could also be employed. Especially in the field of picking and placing foodstuffs, pneumatic elements are advantageous due to the low contamination risk that these elements pose.

Preferably, the gripping blade is profiled to reduce adhesion between product and gripping blade. For instance, ridges can be placed on the surface of the gripping blade. This will reduce the contact area between product and gripping blade while still providing enough area to grip and lift the product. In addition, the profile on the gripping blade can be arranged to allow for easy transportation of liquids or other substances that may leave the products during handling, e.g. water or fats from meat products.

It is advantageous if the gripper comprises a pair of gripping assemblies as previously described. These gripping assemblies could be identical and or complementary. In embodiments comprising a single gripping assembly, a fixed member could be used together with the gripping assembly to achieve the gripping action.

Preferably, the distance in the open position between the arms of different gripping assemblies is adjustable. In this way, the gripper can be optimized for different lateral dimensions of the product.

Each of the gripping arms of the pair of gripping assemblies must be mechanically driven. Usually, the arms of a given assembly are mechanically coupled due to the fact that they are fixedly connected. Gripping arms belonging to different gripping assemblies, and therefore also the gripping assemblies themselves, are preferably mechanically coupled. This allows for a single mechanical drive to be used to drive both or all gripping assemblies or gripping arms.

The pressing member is preferably controllable to vary the pressing force. This allows the pressing force to be optimized with respect to the characteristics of the product to be displaced.

It is advantageous if the pressing member comprises a pneumatic or hydraulic cylinder having a moveable end thereof adapted to clamp the product. The other end of the cylinder could be fixedly connected to the mounting frame.

The moveable end could be connected to a profiled clamping member that extends in a plane perpendicular to a longitudinal axis of the cylinder. This plane should be parallel to the top surface of the product to be displaced to enable sufficient clamping.

To obtain an advantageous clamping, the clamping member should at least partly overlap with the gripping blade in the closed position. During transport of the product from the first to the second position, the product is held in place in between the clamping element and the gripping blades.

The cylinder of the pressing member can be adapted to be operable in a pressurized state to clamp the product and a non-pressurized state in which the moveable end is freely moveable. Again, for foodstuffs a pneumatic cylinder is preferable. In the non-pressurized state, the moveable end of the cylinder can be moved easily. Hence, prior to gripping, the moveable end can adjust itself to the height of the product. In other words, the product can shift the moveable end upwards. Then, pressure is applied and clamping of the product is achieved in the pressurized state. The thicknesses of the product that can be handled by the gripper are mainly determined by the dynamic range of the cylinder, e.g. the length of the moveable end.

According to a further aspect, the present invention provides a device for picking and placing a product from a first product carrying surface position to a second product carrying surface position. The device is characterized in that the gripping arm is rotationally coupled to the mounting frame, wherein the rotational coupling is arranged to enable rotation of the gripping arm about an axis parallel to the product carrying surface. This device can be equipped with a gripper as previously described.

According to a further aspect, the present invention provides a method to pick and place a product from a first product carrying surface position to a second product carrying surface position using a robotic arm having a moveable end thereof connected to a gripper provided with a gripping blade.

The method according to the invention comprises the steps of determining the first product carrying surface position and orientation of the product, moving the robotic arm to the first product carrying surface position, aligning gripper and product, clamping the product, gripping the product, moving the robotic arm to the second product carrying surface position, and releasing the product. It should be noted that the gripper may rotate after gripping to achieve a desired orientation of the product at the second product carrying surface position, e.g. a desired orientation of slices of meat in a container therefore. It should be noted that within the context of the present invention, determination of the first and/or second product carrying surface positions involves a time component. In other words, determination of the position and orientation provides a result indicating when the product is at the position having what orientation. In most cases, this result is achieved by taking into account the speed of the surface, e.g. conveyor belt, on which the product is or will be placed.

The method distinguishes itself from known methods in that during gripping of the product the gripping blade exerts a gripping force onto the first product carrying surface to enable a scraping motion of the gripping blade over said product carrying surface. This scraping motion is enabled by the gripping blade which comprises a resilient member. It should be noted that the inverse motion is possible during the release of the product.

In the following, the present invention will be elucidated in more detail using a detailed description of embodiments thereof under reference to the accompanied drawings, in which:
Figure 1 illustrates a general configuration of a pick and place device having a robotic arm provided with a gripper according to the present invention;
Figure 2 illustrates a detailed view of the gripper of figure 1 in an open position;
Figure 3 illustrates the gripper of figure 2 in a closed position in which a product is gripped;

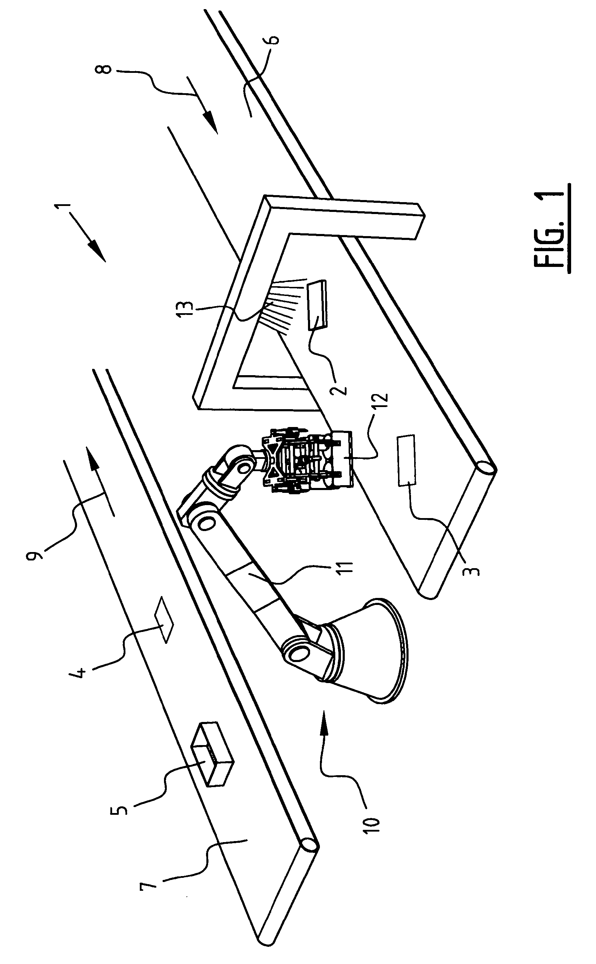

In figure 1, a pick and place device 1 according to the present invention is illustrated. This device is used for picking and placing a product 2 from a first product carrying surface position 3 to a second product carrying surface position 4. Product 2 in this case comprises slices of meat that need to be placed in a plastic container 5. Alternatively, the product could be placed in cardboard boxes, trays, dishes, cans, etc.

The product carrying surface position 3, 4 is the position of the surface that is underneath product 2 at the time of gripping or releasing. In figure 1, the respective product carrying surfaces are part of the surface of respective conveyer belts 6, 7 that move in the direction indicated by arrows 8, 9, respectively.

A robotic arm 10 has a moveable end 11 connected to a gripper 12. The other end of the robotic arm is connected to a stationary frame (not shown). To determine the position and orientation of product 2, pick and place device 1 is provided with detection means 13, e.g. an optical detection unit such as a camera. In figure 1, detection means 13 are placed upstream. Detection means 13 determine the orientation and position of product 2. Because the speed of conveyer belts 6, 7 is known, robotic arm 10 can be controlled to pick up product 2 at the right time at the right position 3 and release it in container 5 at position 4. In addition, gripper 12 can be rotated such that gripper 12 is aligned with product 2.

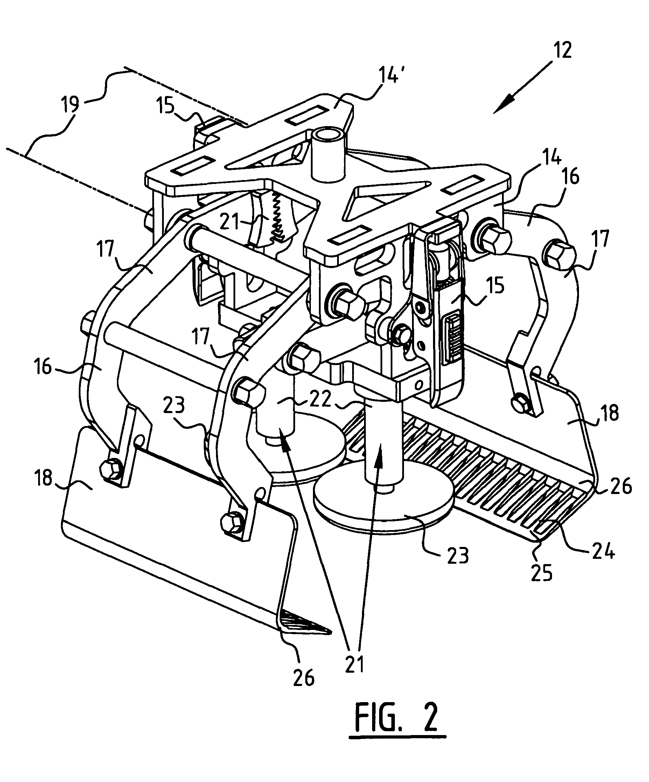

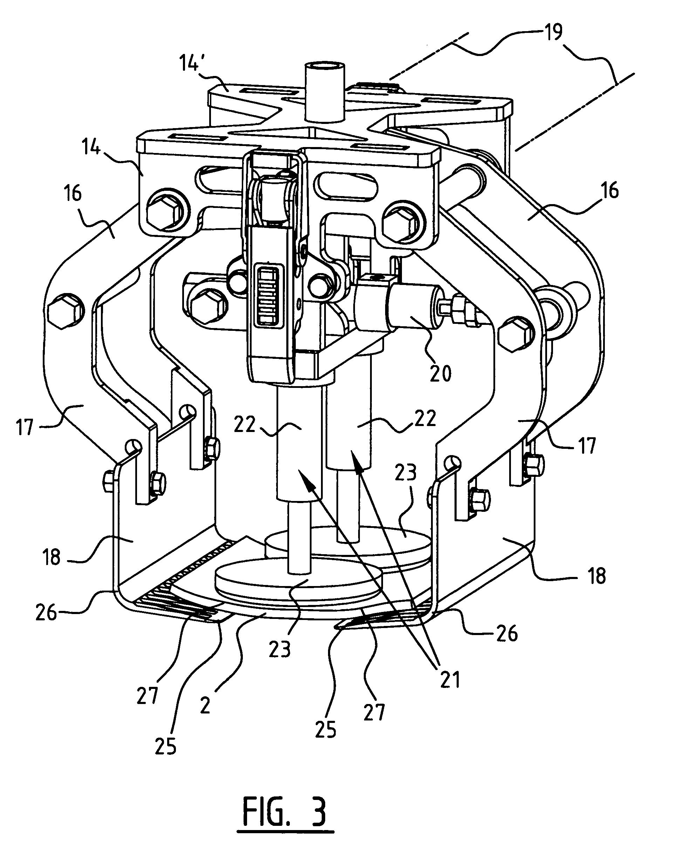

Figure 2 shows a detailed view of gripper 12 of the device of figure 1 in an open position. The gripper comprises a mounting frame 14, which is provided with fixing means 15 for securing gripper 12 to robotic arm 10. For illustrational purposes, gripper 12 is secured to a mounting plate 14' that is normally secured to robotic arm 10. Two gripping assemblies 16 are coupled to mounting frame 14. Each gripping assembly 16 comprises two gripping arms 17 that are each secured to the same gripping blade 18 at their end. The other ends of the arms are rotationally coupled to mounting frame 14 to enable rotation of the gripping arm about an axis 19 parallel to the product carrying surface. This allows gripping blades 18 to move away from each other to the open position, as shown, or to the closed position, as shown in figure 3.

Gripping assemblies 16 can be operated by pneumatic cylinders. In figures 2 and 3, a single cylinder 20 is used to operate both gripping assemblies 16. A mechanical coupling, in this case complementary toothed structures 21, ensures that both assemblies 16 are driven simultaneously. Pneumatic cylinder 20 is known in the art. It is connected to two flexible tubes (not shown) in which a high pressure can be applied. By varying the pressure in the tubes, cylinder 20 can be made to extend or to retract. In figures 2 and 3, one end of cylinder 20 is connected to mounting frame 14, whereas another end is coupled hingedly to a gripping arm 17. It should be noted that, like in figures 2 and 3, also the connection to mounting frame 14 can be a hinged connection.

In figure 2, two pressing members 21 are mounted to mounting frame 14. Pressing members 21 are arranged to clamp product 2 such that during the actual gripping by gripping blades 18, product 2 does not move. Pressing members 21 comprise two pneumatic cylinders 22. A moveable end of each cylinder 22 is coupled to a clamping member 23. Each pneumatic cylinder 22 is connected to a single line or tube (not shown) that can be pressurized. When pressurized, cylinder 22 extends and clamping member 23 moves away from mounting frame 14 towards the product 2. When the line is not pressurized, clamping member 23 can be easily moved. This effect is achieved by allowing a small leak at the end of cylinder 22. This prevents a vacuum to build up which would otherwise limit the movement of clamping member 23. The small leak enables a better control of the pressure in cylinder 22, due to the fact that this pressure is less sensitive to the motion and position of clamping member 23. The pressure can be set by an electronically driven proportional pressure controller.

To prevent product 2 from sticking to gripping blade 18 or clamping member 23, the product facing surfaces are profiled. In figure 2, gripping blade 18 comprises ridges 24. Similarly, however not shown, the back surface of clamping member 23 also comprises ridges, albeit circular. Ridges 24 limit the contacting surface and provide guiding channels for any liquids or substances that may emerge from product 2.

As shown in figure 1, gripping blades 18 are not parallel to conveyor belt 6, 7. Instead, the leading edge 25 of gripping blade 18, which is nearest to product 2, is positioned more downwards than the opposite edge 26. Consequently, leading edge 25 will first touch the surface during gripping and a larger force will be exerted on this end of gripping blade 18.

Gripping blade 18 illustrated in figure 2, is made from glass fiber reinforced plastic or polyester, although other resilient materials can be used as well, such as Teflon treated resilient steel.

It is also possible that only a part of gripping blade 18 is resilient. Furthermore, mounting frame 14 and gripping arms 17 can be made from aluminum or plastic.

The rotational movement of gripping arms 17 improves the gripping abilities of gripping blades 18 and of gripper 12 as a whole. This effect is further improved by the orientation of gripping blade 18, as described above, and the material of which gripping blade 18 is made. During the gripping process, gripping blade 18 will deform under influence of the force exerted by conveyor belt 6, 7 onto gripping blade 18. Consequently, gripping blade 18 will firmly press on the surface allowing a scraping motion. This motion, in addition with the ramped and pointed shape of the gripping blade tips ensures an efficient pick up of product 2.

Figure 3 illustrates gripper 12 of figure 2 in a closed position in which product 2 is gripped. This figure clearly illustrates that gripping blades 18 are deformed and that product 2 is clamped by pressing members 21. It should be noted that clamping members 23 and gripping blades 18 have overlapping portions 27. This allows for a better gripping of product 2, reducing inter alia the risk that product 2 will bend during transportation in between conveyor belts 6, 7.

Several modifications to the embodiment shown in figures 2 and 3 are possible. For instance, the distance in between gripping arms 18 could be adjustable. This allows for gripper 12 to be adjusted to the lateral dimensions of product 2 improving the flexibility of the system. This adjustability could also be driven by a pneumatic cylinder.

Another modification involves the addition of force absorbing means to absorb at least part of the force exerted by the product carrying surface, e.g. conveyor belt 6, 7, onto gripper 12. These means could prevent gripper 12 to get damaged due to excessive forces. It should be noted that the absorption of the force limits the net force on gripping blades 18. An example of force absorption means is a damper which could be installed in between gripper 12 and moveable end 11 of robotic arm 10. In a further development, these absorbing means can be regulated to for instance limit the force absorption for highly pliable products and to damp the force for more rigid products.

It should be obvious to the skilled man in the art that various modifications are possible of the embodiments shown and described above, without deviating from the scope of the invention as defined by the following claims.

## Claims

1. A gripper (12) arranged for gripping and/or releasing a product (2), such as foodstuff, off or onto a product carrying surface, such as a conveyor belt (6, 7), wherein said gripper (12) comprises:
a mounting frame (14) provided with means (15) for mounting said mounting frame (14) to a robotic arm (10);
a pair of gripping assemblies (16), each gripping assembly comprising a gripping arm (17) having a fixed length and having one end thereof rotationally coupled to the mounting frame (14) for rotation of the gripping arm about an axis (19) parallel to said product carrying surface, and another end thereof secured to a gripping blade (18), wherein the pair of gripping assemblies (16) is operable to be in a closed position to grip the product (2) and an open position to release the product (2); and
a pressing member (21) coupled to the mounting frame arranged for clamping the product (2) by exerting a pressing force thereto;
wherein the gripping blade comprises a resilient member for enabling a scraping motion of said gripping blade during the gripping of the product;
**characterized in that**, the rotational axes (19) of the pair of gripping assemblies (16) are arranged spaced apart relative to each other and stationary with respect to the mounting frame (14).

2. The gripper according to claim 1, wherein at least one of the gripping arm and the gripping blade is deformable.

3. The gripper according to claim 1 or 2, wherein the gripper comprises means arranged to absorb a force exerted by the product carrying surface on the gripper during placement or release of the product.

4. The gripper according to any of the preceding claims, wherein the force absorption means can be regulated.

5. The gripper according to any of the preceding claims, wherein a back surface of the gripping blade is arranged obliquely with respect to the product carrying surface.

6. The gripper according to any of the preceding claims, wherein the gripping arm and the pressing member can be mechanically driven.

7. The gripper according to any of the preceding claims, wherein the gripping arm is connected to pneumatic and/or hydraulic cylinders (20).

8. The gripper according to any of the preceding claims, wherein the gripping blade is profiled to reduce adhesion between product and gripping blade.

9. The gripper according to any of the preceding claims, wherein a distance in the open position between the arms of different gripping assemblies is preferably adjustable and or wherein the pair of gripping assemblies is preferably mechanically coupled.

10. The gripper according to any of the preceding claims, wherein the pressing member is controllable to vary the pressing force.

11. The gripper according to any of the preceding claims, wherein the pressing member comprises a pneumatic or hydraulic cylinder (22) having a moveable end thereof adapted to clamp the product, wherein the moveable end of the cylinder of the pressing member is preferably connected to a profiled clamping member (23) that extends in a plane perpendicular to a longitudinal axis of said cylinder, and or wherein the clamping member preferably at least partly overlaps with the gripping blade in the closed position.

12. The gripper according to claim 11, wherein the cylinder of the pressing member is adapted to be operable in a pressurized state to clamp the product and a non-pressurized state in which the moveable end is freely moveable.

13. A device (1) for picking and placing a product (2) from a first product carrying surface position (3) to a second product carrying surface position (4) comprising:
a robotic arm (10) having a moveable end (11) thereof connected to a gripper (12) as defined in any of the previous claims;
detection means (13) to determine the first product carrying surface position (3) and orientation of the product (2);
a controller to move and orient the robotic arm (10) and gripper (12) in accordance with the determined first product carrying surface position (3) and orientation of the product (2), to pick up the product (2) by controlling the gripper (12), to move the robotic arm (10) to the second product carrying surface position (4), and to release the product (2) by controlling the gripper (12).

## Patentansprüche

1. Greifer (12), der zum Greifen und/oder Lösen eines Produktes (2) wie zum Beispiel Nahrungsmittel von oder auf einer Produktträgerfläche wie zum Beispiel ein Förderriemen (6, 7) eingerichtet ist, wobei der Greifer (12) Folgendes aufweist:
einen Montagerahmen (14), der mit einer Einrichtung (15) zum Montieren des Montagerahmens (14) an einen Roboterarm (10) versehen ist;
ein Paar Greiferbaugruppen (16), wobei jede Greiferbaugruppe einen Greiferarm (17) aufweist, der eine feste Länge hat und von dem ein Ende drehbar an den Montagerahmen (14) für eine Drehung des Greiferarms um eine Achse (19) parallel zu der Produktträgerfläche gekoppelt ist, und wobei sein anderes Ende an einer Greiferklinge (18) gesichert ist, wobei das Paar Greiferbaugruppen (16) so betreibbar ist, dass sie in einer geschlossenen Position zum Greifen des Produktes (2) und in einer geöffneten Position zum Lösen des Produktes (2) sind; und
ein Drückelement (21), das an den Montagerahmen gekoppelt und zum Klemmen des Produktes (2) eingerichtet ist, indem es eine Druckkraft daran aufbringt;
wobei die Greiferklinge ein elastisches Element aufweist, um eine Kratzbewegung der Greiferklinge während des Greifens des Produktes zu ermöglichen;
**dadurch gekennzeichnet, dass** die Drehachsen (19) des Paares Greiferbaugruppen (16) relativ zueinander räumlich beabstandet und ortsfest hinsichtlich des Montagerahmens (14) angeordnet sind.

2. Greifer gemäß Anspruch 1, wobei zumindest der Greiferarm oder die Greiferklinge verformbar ist.

3. Greifer gemäß Anspruch 1 oder 2, wobei der Greifer eine Einrichtung aufweist, die zum Absorbieren einer Kraft eingerichtet ist, die durch die Produktträgerfläche auf den Greifer während des Platzierens oder Lösens des Produktes aufgebracht wird.

4. Greifer gemäß einem der vorherigen Ansprüche, wobei die Kraftabsorptionseinrichtung reguliert werden kann.

5. Greifer gemäß einem der vorherigen Ansprüche, wobei eine hintere Fläche der Greiferklinge schräg hinsichtlich der Produktträgerfläche angeordnet ist.

6. Greifer gemäß einem der vorherigen Ansprüche, wobei der Greiferarm und das Drückelement mechanisch angetrieben werden können.

7. Greifer gemäß einem der vorherigen Ansprüche, wobei der Greiferarm mit pneumatischen und/oder hydraulischen Zylindern (20) verbunden ist.

8. Greifer gemäß einem der vorherigen Ansprüche, wobei die Greiferklinge so profiliert ist, dass eine Adhäsion zwischen dem Produkt und der Greiferklinge reduziert wird.

9. Greifer gemäß einem der vorherigen Ansprüche, wobei ein Abstand zwischen den Armen bei der geöffneten Position von unterschiedlichen Greiferbaugruppen vorzugsweise einstellbar ist, und/oder wobei das Paar Greiferbaugruppen vorzugsweise mechanisch gekoppelt ist.

10. Greifer gemäß einem der vorherigen Ansprüche, wobei das Drückelement steuerbar ist, um die Drückkraft zu variieren.

11. Greifer gemäß einem der vorherigen Ansprüche, wobei das Drückelement einen pneumatischen oder hydraulischen Zylinder (22) aufweist, von dem ein Ende bewegbar ist und daran angepasst ist, das Produkt zu klemmen, wobei das bewegbare Ende des Zylinders des Drückelements vorzugsweise mit einem profilierten Klemmelement (23) verbunden ist, das sich in einer Ebene erstreckt, die senkrecht zu einer Längsachse des Zylinders ist, und/oder wobei sich das Klemmelement vorzugsweise zumindest teilweise mit der Greiferklinge bei der geschlossenen Position überlappt.

12. Greifer gemäß Anspruch 11, wobei der Zylinder des Drückelementes daran angepasst ist, in einem mit Druck beaufschlagten Zustand zum Klemmen des Produkts und in einem nicht mit Druck beaufschlagten Zustand betreibbar zu sein, bei dem das bewegbare Ende frei bewegbar ist.

13. Vorrichtung (1) zum Aufnehmen und Platzieren eines Produktes (2) von einer ersten Produktträgerflächenposition (3) zu einer zweiten Produktträgerflächenposition (4), mit:
einem Roboterarm (10), von dem ein bewegbares Ende (11) mit einem Greifer (12) verbunden ist, wie er in einem der vorherigen Ansprüche definiert ist;
einer Erfassungseinrichtung (13) zum Bestimmen der ersten Produktträgerflächenposition (3) und einer Orientierung des Produktes (2);
einer Steuervorrichtung zum Bewegen und Orientieren des Roboterarms (10) und des Greifers (12) gemäß der bestimmten ersten Produktträgerflächenposition (3) und einer Orientierung des Produktes (2), zum Aufnehmen des Produktes (2) durch Steuern des Greifers (12), zum Bewegen des Roboterarms (10) zu der zweiten Produktträgerflächenposition (4) und zum Lösen des Produktes (2) durch Steuern des Greifers (12).

## Revendications

1. Dispositif de préhension (12) agencé pour saisir et/ou libérer un produit (2), par exemple un aliment, depuis ou sur une surface de support de produit, telle qu'une courroie transporteuse (6, 7), dans lequel ledit dispositif de préhension (12) comprend :
un châssis de montage (14) prévu avec des moyens (15) pour monter ledit châssis de montage (14) sur un bras robotisé (10) ;
une paire d'ensembles de préhension (16), chaque ensemble de préhension comprenant un bras de préhension (17) ayant une longueur fixe et ayant son extrémité couplée de manière rotative au châssis de montage (14) pour faire tourner le bras de préhension autour d'un axe (19) parallèle à ladite surface de support de produit, et son autre extrémité fixée à une lame de préhension (18), dans lequel la paire d'ensembles de préhension (16) peut être actionnée pour être dans une position fermée afin de saisir le produit (2) ou une position ouverte pour libérer le produit (2) ; et
un élément de pression (21) couplé au châssis de montage agencé pour serrer le produit (2) en exerçant une force de pression sur ce dernier ;
dans lequel la lame de préhension comprend un élément élastique pour permettre un mouvement de raclage de ladite lame de préhension pendant la préhension du produit ;
**caractérisé en ce que**, les axes de rotation (19) de la paire d'ensembles de préhension (16) sont agencés à distance l'un de l'autre et fixes par rapport au châssis de montage (14).

2. Dispositif de préhension selon la revendication 1, dans lequel au moins l'un parmi le bras de préhension et la lame de préhension est déformable.

3. Dispositif de préhension selon la revendication 1 ou 2, dans lequel le dispositif de préhension comprend des moyens agencés pour absorber une force exercée par la surface de support de produit sur le dispositif de préhension pendant la mise en place ou la libération du produit.

4. Dispositif de préhension selon l'une quelconque des revendications précédentes, dans lequel les moyens d'absorption de force peuvent être régulés.

5. Dispositif de préhension selon l'une quelconque des revendications précédentes, dans lequel une surface arrière de la lame de préhension est agencée de manière oblique par rapport à la surface de support de produit.

6. Dispositif de préhension selon l'une quelconque des revendications précédentes, dans lequel le bras de préhension et l'élément de pression peuvent être entraînés mécaniquement.

7. Dispositif de préhension selon l'une quelconque des revendications précédentes, dans lequel le bras de préhension est raccordé à des vérins pneumatiques et/ou hydrauliques (20).

8. Dispositif de préhension selon l'une quelconque des revendications précédentes, dans lequel la lame de préhension est profilée afin de réduire l'adhésion entre le produit et la lame de préhension.

9. Dispositif de préhension selon l'une quelconque des revendications précédentes, dans lequel une distance dans la position ouverte entre les bras des différents ensembles de préhension est de préférence ajustable et/ou dans lequel la paire d'ensembles de préhension est de préférence couplée de manière mécanique.

10. Dispositif de préhension selon l'une quelconque des revendications précédentes, dans lequel l'élément de pression peut être contrôlé pour modifier la force de pression.

11. Dispositif de préhension selon l'une quelconque des revendications précédentes, dans lequel l'élément de pression comprend un vérin pneumatique ou hydraulique (22) ayant son extrémité mobile adaptée pour serrer le produit, dans lequel l'extrémité mobile du vérin de l'élément de pression est de préférence raccordée à un élément de serrage profilé (23) qui s'étend dans un plan perpendiculaire à un axe longitudinal dudit vérin, et/ou dans lequel l'élément de serrage recouvre de préférence au moins partiellement la lame de préhension dans la position fermée.

12. Dispositif de préhension selon la revendication 11, dans lequel le vérin de l'élément de pression est adapté pour être actionné dans un état sous pression pour serrer le produit et dans un état qui n'est pas sous pression dans lequel l'extrémité mobile est librement mobile.

13. Dispositif (1) pour prélever et placer un produit (2) d'une première position de surface de support de produit (3) à une deuxième position de surface de support de produit (4) comprenant :
un bras robotisé (10) ayant son extrémité mobile (11) raccordée à un dispositif de préhension (12) selon l'une quelconque des revendications précédentes ;
des moyens de détection (13) pour déterminer la première position de surface de support de produit (3) et l'orientation du produit (2) ;
un contrôleur pour déplacer et orienter le bras robotisé (10) et un dispositif de préhension (12) selon la première position de surface de support de produit (3) déterminée et l'orientation du produit (2), afin de prélever le produit (2) en contrôlant le dispositif de préhension (12) pour déplacer le bras robotisé (10) dans la deuxième position de surface de support de produit (4), et pour libérer le produit (2) en contrôlant le dispositif de préhension (12).
